# EUROPEAN PATENT SPECIFICATION

(11) **EP 4 406 816 B1**
(45) Date of publication and mention of the grant of the patent: **03.06.2026**
(21) Application number: 23153836.4
(22) Date of filing: 30.01.2023
(51) Int. Cl.: B62D 5/04, B62D 1/16

(54) **METHOD AND CONTROLLER FOR CONTROLLING A STEERING SYSTEM FOR A VEHICLE, AND STEERING SYSTEM FOR A VEHICLE**
VERFAHREN UND STEUERGERÄT ZUM STEUERN EINES LENKSYSTEMS FÜR EIN FAHRZEUG UND LENKSYSTEM FÜR EIN FAHRZEUG
PROCÉDÉ ET DISPOSITIF DE COMMANDE POUR COMMANDER UN SYSTÈME DE DIRECTION POUR UN VÉHICULE ET SYSTÈME DE DIRECTION POUR UN VÉHICULE

(43) Date of publication of application: 31.07.2024
(73) Proprietor: KNORR-BREMSE Systeme für Nutzfahrzeuge GmbH, 80809 München (DE)
(72) Inventor: Yousefi Mavi, Edalat, 80809 München (DE)

(56) References cited:
- US-B1- 6 186 267
- US-B2- 10 232 873

## Description

The present invention relates to a method for controlling a steering system for a vehicle, to a controller for controlling a steering system for a vehicle and to a steering system for a vehicle.

In vehicle steering systems, universal joints may be used for coupling shafts of a linkage of the steering system to each other. Universal joints, also referred to as U-joints or universal couplings, are not of the constant velocity type, which means that, of the two shafts coupled thereby, only one rotates at constant speed while the other rotates at variable speed. This especially holds for Cardan joints and may cause a non-uniform feeling during steering the vehicle.

US 10,232,873 B2 relates to a method to identify nonuniformity in a vehicle steering system by determining a non-uniformity angle associated with a steering column based on a steering wheel angle measured relative to a first universal joint, based on a pinion angle measured relative to a second universal joint, and based on a torsion bar torque associated with a torsion bar, by mapping the non-uniformity angle to a first position of the steering column, and by determining an offset to adjust a steering response based on the first position.

Against this background, it is the object of the present invention to provide an improved method for controlling a steering system for a vehicle, an improved controller for controlling a steering system for a vehicle and an improved steering system for a vehicle.

This object is achieved by a method for controlling a steering system for a vehicle, by a controller for controlling a steering system for a vehicle and by a steering system for a vehicle according to the main claims. The present invention also concerns a computer program and a computer-readable data carrier.

According to embodiments, for example, non-uniformity effects of a universal joint, also referred to as U-joint or universal coupling, in a vehicle steering system may be calculated and then be compensated by correspondingly controlling a power steering unit of the steering system. In other words, for example, there is provided an algorithm for compensating the non-uniformity on an input shaft, introduced by the U-joint of a column shaft of the steering system. In particular, such a function or algorithm may calculate the U-joint non-uniformity effect during steering and compensate it on a power steering assembly in order to advantageously remove the non-uniform steering feeling. Thus, the U-joint non-uniformity effect may be minimized or eliminated, resulting in a uniform feeling during steering of the vehicle. While it may be possible to adjust such a universal joint offset angle during end-of-line tuning in an attempt to minimize this non-uniformity by mechanical adjustment, this would not remove the non-uniformity completely and maybe not even reduce it sufficiently at all, in contrast to the compensation achieved according to embodiments.

According to the invention there is provided a method for controlling a steering system for a vehicle comprises the steps of:
determining a uniformity measure of angular position and speed of a shaft of a linkage assembly of the steering system, wherein the shaft is coupled to at least another shaft of the linkage assembly by means of at least one universal joint, wherein the uniformity measure is determined using at least one sensor signal from at least one sensor of the steering system for sensing rotation of the shaft when steering torque is input by a driver of the vehicle, wherein the angular position and speed of the shaft are ascertained from the at least one sensor signal; and
generating a control signal for controlling at least one actuator of a power steering assembly of the steering system, wherein the control signal is generated depending on the uniformity measure to comprise a control parameter defining corrective torque for adjusting torque provided to the linkage assembly by the at least one actuator.

The vehicle may be a motor vehicle, such as a utility vehicle or commercial vehicle, for example a truck, bus or the like. The method or the steps of the method may be executed using a controller having means therefor. The uniformity measure may represent variations in the angular position and speed of the shaft depending on the rotation angle of the shaft and/or over time. The shaft may be a steering column, steering shaft or coupled to a steering column or steering shaft of the steering system. The at least one universal joint may be a Cardan joint. The at least one sensor signal may directly or indirectly represent the angular position and speed or rotation angle of the shaft. For example, the steering system may comprise two or more sensors to read angular velocity and shaft position or steering shaft position. The control signal with the control parameter may be used to control the at least one actuator to apply corrective torque in addition to the torque provided to the linkage assembly, resulting in adjusted torque. The corrective torque may be calculated so as to even out, counter or compensate the variations in the angular position and speed of the shaft.

According to an embodiment, the step of determining may be executed once to determine a static uniformity measure. Herein, the step of generating may be executed repeatedly using the static uniformity measure. In particular, the step of generating may be executed repeatedly using the static uniformity measure when steering torque is input by a driver of the vehicle. Such an embodiment offers the advantage that U-joint non-uniformity may be compensated by a simple, quick and reliable process at reduced computational overhead.

According to the invention, the step of determining is executed repeatedly to determine a dynamic uniformity measure. Herein, the step of generating is executed repeatedly using the dynamic uniformity measure. In particular, the step of generating may be executed repeatedly using the dynamic uniformity measure when steering torque is input by a driver of the vehicle. Such an embodiment offers the advantage that U-joint non-uniformity may be compensated in a particularly reliable and exact way, also taking potential changes in U-joint behavior over time into consideration.

According to the invention, in the step of determining, the dynamic uniformity measure is stored and updated with each repeated execution of the step of determining. Such an embodiment offers the advantage that it is possible to keep track of potential changes in U-joint behavior over time, resulting in a dynamic uniformity measure that is continuously kept up to date to reflect current behavior of the at least one U-joint.

According to an embodiment, the method may comprise a step of receiving the at least one sensor signal from the at least one sensor via an input interface. Such an embodiment offers the advantage that the at least one sensor signal may be obtained reliably.

According to an embodiment, the method may comprise a step of outputting the control signal to the at least one actuator via an output interface. Such an embodiment offers the advantage that the at least one actuator may be controlled reliably by means of the control signal.

The method or the steps of the method may be executed using a controller. Thus, the method may be executed to control an embodiment of a subsequently mentioned steering system.

The approach presented here also provides a controller configured to execute, control or perform, in corresponding means or units, the steps of a variant of a method presented here. The object underlying the invention may be achieved quickly and efficiently also by this embodiment of the invention in form of a controller.

To this end, the controller may comprise at least one processing unit for processing signals or data, at least one storage unit for storing signals or data, at least one interface to the at least one sensor or an actuator reading sensor signals from the at least one sensor or for outputting control signals to the actuator and/or at least one communication interface for reading or outputting data embedded in a communication protocol. The processing unit may, for example, be a signal processor, a microcontroller or the like, wherein the storage unit may be a flash memory, an EPROM, EEPROM or a magnetic storage unit. The communication interface may be configured to read or output data in a wireless and/or wired manner, wherein a communication interface capable of reading or outputting data via a line may read this data electrically or optically from a corresponding data transmission line or output the same into a corresponding data transmission line, for example.

A controller may be a technical device processing sensor signals and outputting control and/or data signals depending thereon. The controller may comprise an interface, which may be configured as hardware and/or software. If configured as hardware, the interfaces may, for example, be part of a so-called system ASIC including various functions of the controller. However, it is also possible for the interfaces to be discrete integrated circuits or at least partly consist of discrete components. If configured as software, the interfaces may be software modules present on a microcontroller along with other software modules, for example.

A steering system for a vehicle comprises:
a linkage assembly having two or more shafts and one or more universal joints coupling the shafts;
at least one sensor for sensing rotation of one of the shafts;
a power steering assembly having at least one actuator; and
an embodiment of the controller mentioned herein, wherein the controller is communicatively connected to the at least one sensor and to the at least one actuator.

The steering system or, more specifically, operation of the steering system may be controlled by means of the controller, wherein the controller comprises means for carrying out the steps of an embodiment of the method mentioned herein.

What is also advantageous is a computer program product or to program with program code which may be stored on a machine-readable carrier or storage medium, such as a semiconductor memory, a hard-drive memory or an optical memory, and is used for executing, performing/controlling the steps of the method according to one of the embodiments previously described, in particular when the program product or program is executed on a computer or a device, such as a controller.

Embodiments of the approach presented here shall be explained in greater detail in the subsequent description with reference to the figures, wherein:
Fig. 1 shows a schematic illustration of a vehicle comprising a steering system according to an embodiment of the present invention; and
Fig. 2 shows a flowchart of a method for controlling a steering system for a vehicle according to an embodiment of the present invention.

In the following description of advantageous embodiments of the present invention, the same or similar reference numerals shall be used for the elements depicted in the various figures and acting in a similar way, wherein repeated description of these elements shall be omitted.

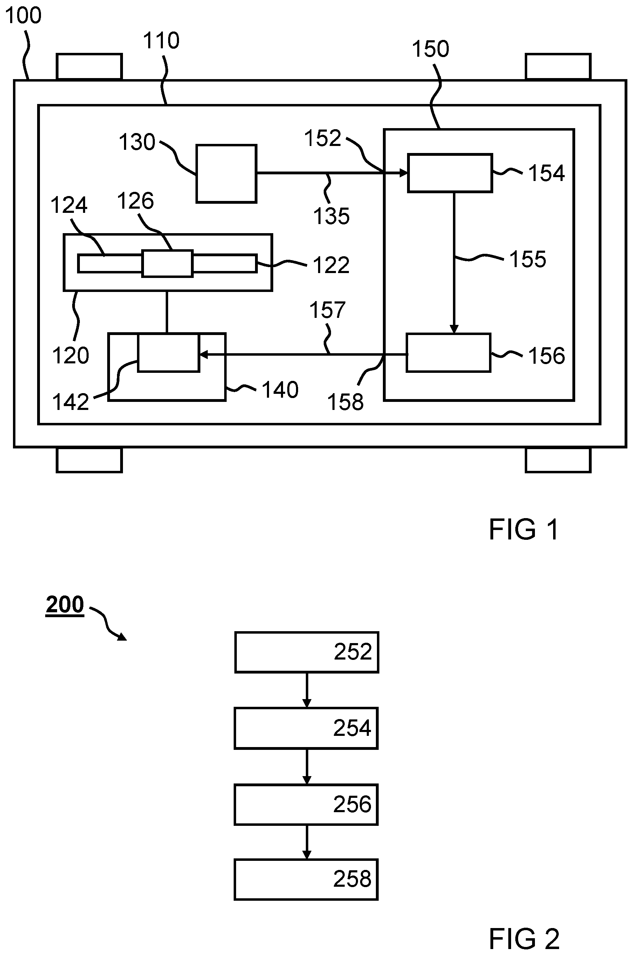

**Fig. 1** shows a schematic illustration of a vehicle 100 comprising a steering system 110 according to an embodiment of the present invention. The vehicle 100 is a utility vehicle or commercial vehicle, such as a truck, for example. The steering system 110 comprises a linkage assembly 120, at least one sensor 130, a power steering assembly 140 and a controller 150.

The linkage assembly 120 comprises a rotatably arranged shaft 122, at least another rotatably arranged shaft 124 and at least one universal joint 126, in particular a Cardan joint or the like, for coupling the shaft 122 to the at least one other shaft 124. The at least one universal joint 126 is also referred to as a U-joint or universal coupling. The shaft 122 and the at least one other shaft 124 of the linkage assembly 120 are mechanically coupled to each other by the at least one universal joint 126. In particular, the shaft 122 is a steering column or is coupled to a steering column of the steering system 110.

The at least one sensor 130 of the steering system 110 is configured and arranged to sense rotation of the shaft 122. The at least one sensor 130 is also configured to provide at least one sensor signal 135, which represents angular position and speed of the shaft 122 or from which angular position and speed of the shaft 122 can be ascertained. According to an embodiment, the steering system 110 may comprise two or more sensors 130 to read angular velocity and position of the shaft 122 or steering shaft.

The power steering assembly 140 comprises at least one actuator 142. The power steering assembly 140 is coupled to the linkage assembly 120. The actuator 142 is configured to provide torque to the linkage assembly 120.

The controller 150 is communicatively connected to the at least one sensor 130 and to the actuator 142 of the power steering assembly 140.The controller 150 is configured to control the steering system 110. To this end, the controller 150 comprises means 154 for determining and means 156 for generating. According to the embodiment illustrated here, the controller 150 also comprises an input interface 152 and an output interface 158.

The controller 150 is configured to receive the at least one sensor signal 135 from the at least one sensor 130 via the input interface 152. The means 154 for determining are configured to determine a uniformity measure 155 of angular position and speed of the shaft 122 of the linkage assembly 120 using the at least one sensor signal 135 from the at least one sensor 130 when steering torque is input by a driver of the vehicle 100. Optionally, the means 154 for determining are configured to ascertain the angular position and speed of the shaft 122 from the at least one sensor signal 135. The means 154 for determining are configured to pass the uniformity measure 155 on to the means 156 for generating.

The means 156 for generating are configured to generate a control signal 157 for controlling the at least one actuator 142 of the power steering assembly 140 depending on the uniformity measure 155. The means 156 for generating are configured to generate the control signal 157 depending on the uniformity measure 155 to comprise a control parameter defining corrective torque for adjusting the torque provided to the linkage assembly 120 by the actuator 142. The controller 150 is configured to output the control signal 157 to the actuator 142 via the output interface 158. Thus, U-joint non-uniformity effects may be compensated, minimized and/or eliminated.

**Fig. 2** shows a flowchart of a method 200 for controlling a steering system for a vehicle according to an embodiment of the present invention. The steps of the method 200 for controlling are executable by the controller of Fig. 1 or a similar controller. The method 200 is executable to control the steering system of Fig. 1 or a similar steering system. The method 200 for controlling comprises a step 254 of determining and a step 256 of generating.

In the step 254 of determining, a uniformity measure of angular position and speed of a shaft of a linkage assembly of the steering system is determined. The shaft is coupled to at least another shaft of the linkage assembly by means of at least one universal joint. In the step 254 of determining, the uniformity measure is determined using at least one sensor signal from at least one sensor of the steering system for sensing rotation of the shaft when steering torque is input by a driver of the vehicle. The angular position and speed of the shaft are ascertained from the at least one sensor signal.

In the step 256 of generating, a control signal for controlling at least one actuator of a power steering assembly of the steering system is generated depending on the uniformity measure. In the step 256 of generating, the control signal is generated depending on the uniformity measure to comprise a control parameter defining corrective torque for adjusting torque provided to the linkage assembly by the at least one actuator.

According to an embodiment, the step 254 of determining is executed once to determine a static uniformity measure, and the step 256 of generating is executed repeatedly using the static uniformity measure. As an alternative, the step 254 of determining is executed repeatedly to determine a dynamic uniformity measure, and the step 256 of generating is executed repeatedly using the dynamic uniformity measure. Optionally, in the step 254 of determining, the dynamic uniformity measure is also stored and updated with each repeated execution of the step 254 of determining.

According to an embodiment, the method 200 for controlling further comprises a step 252 of receiving the at least one sensor signal from the at least one sensor via an input interface. According to an embodiment, the method 200 for controlling also comprises a step 258 of outputting the control signal generated in the step 256 of generating to the at least one actuator via an output interface.

### REFERENCE NUMERAL LIST

- 100: vehicle
- 110: steering system
- 120: linkage assembly
- 122: shaft
- 124: other shaft
- 126: universal joint
- 130: sensor
- 135: sensor signal
- 140: power steering assembly
- 142: actuator
- 150: controller
- 152: input interface
- 154: means for determining
- 155: uniformity measure
- 156: means for generating
- 157: control signal
- 158: output interface

- 200: method for controlling
- 252: step of receiving
- 254: step of determining
- 256: step of generating
- 258: step of outputting

## Claims

1. A method (200) for controlling a steering system (110) for a vehicle (100),
wherein the method (200) comprises the steps of:
determining (254) a uniformity measure (155) of angular position and speed of a shaft (122) of a linkage assembly (120) of the steering system (110), wherein the shaft (122) is coupled to at least another shaft (124) of the linkage assembly (120) by means of at least one universal joint (126), wherein the uniformity measure (155) is determined using at least one sensor signal (135) from at least one sensor (130) of the steering system (110) for sensing rotation of the shaft (122) when steering torque is input by a driver of the vehicle (100), wherein the angular position and speed of the shaft (122) are ascertained from the at least one sensor signal (135), wherein the step (254) of determining is executed repeatedly to determine a dynamic uniformity measure (155), wherein in the step (254) of determining, the dynamic uniformity measure (155) is stored and updated with each repeated execution of the step (254) of determining; and
generating (256) a control signal (157) for controlling at least one actuator (142) of a power steering assembly (140) of the steering system (110), wherein the control signal (157) is generated depending on the uniformity measure (155) to comprise a control parameter defining corrective torque for adjusting torque provided to the linkage assembly (120) by the at least one actuator (142), wherein the step (256) of generating is executed repeatedly using the dynamic uniformity measure (155).

2. The method (200) according to claim 1, comprising a step (252) of receiving the at least one sensor signal (135) from the at least one sensor (130) via an input interface (152).

3. The method (200) according to one of the preceding claims, comprising a step (258) of outputting the control signal (157) to the at least one actuator (142) via an output interface (158).

4. A controller (150) comprising means (154, 156) for carrying out the steps of the method (200) according to one of the preceding claims.

5. A steering system (110) for a vehicle (100), wherein the steering system (110) comprises:
a linkage assembly (120) having a shaft (122), at least another shaft (124) and at least one universal joint (126) coupling the shafts (122, 124);
at least one sensor (130) for sensing rotation of the shaft (122);
a power steering assembly (140) having at least one actuator (142); and
a controller (150) according to claim 4, wherein the controller (150) is communicatively connected to the at least one sensor (130) and to the at least one actuator (142).

6. A computer program comprising instructions which, when the program is executed by a computer controlling a steering system (110) for a vehicle (100) according to claim 5, cause the computer to carry out the steps of the method (200) according to one of claims 1 to 3.

7. A computer-readable data carrier having stored thereon the computer program according to claim 6.

## Patentansprüche

1. Verfahren (200) zum Steuern eines Lenksystems (110) für ein Fahrzeug (100), wobei das Verfahren (200) die folgenden Schritte umfasst:
Bestimmen (254) eines Gleichmäßigkeitsmaßes (155) der Winkelposition und - geschwindigkeit einer Welle (122) einer Gestängeanordnung (120) des Lenksystems (110), wobei die Welle (122) mittels mindestens eines Kardangelenks (126) mit mindestens einer anderen Welle (124) der Gestängeanordnung (120) gekoppelt ist, wobei das Gleichmäßigkeitsmaß (155) unter Verwendung mindestens eines Sensorsignals (135) von mindestens einem Sensor (130) des Lenksystems (110) zum Erfassen einer Rotation der Welle (122) bestimmt wird, wenn von einem Fahrer des Fahrzeugs (100) ein Lenkdrehmoment eingegeben wird, wobei die Winkelposition und -geschwindigkeit der Welle (122) aus dem mindestens einen Sensorsignal (135) ermittelt werden, wobei der Schritt (254) zum Bestimmen wiederholt ausgeführt wird, um ein dynamisches Gleichmäßigkeitsmaß (155) zu bestimmen, wobei im Schritt (254) zum Bestimmen ein dynamisches Gleichmäßigkeitsmaß (155) gespeichert und bei jeder Ausführung des Schritts (254) zum Bestimmen aktualisiert wird; und
Erzeugen (256) eines Steuersignals (157) zum Steuern mindestens einer Betätigungsvorrichtung (142) einer Servolenkungsanordnung (140) des Lenksystems (110), wobei das Steuersignal (157) in Abhängigkeit vom Gleichmäßigkeitsmaß (155) erzeugt wird, um einen Steuerparameter zu umfassen, der ein Korrekturdrehmoment zum Anpassen eines Drehmoments definiert, das der Gestängeanordnung (120) von der mindestens einen Betätigungsvorrichtung (142) bereitgestellt wird, wobei der Schritt (256) zum Erzeugen wiederholt unter Verwendung des dynamischen Gleichmäßigkeitsmaßes (155) ausgeführt wird.

2. Verfahren (200) nach Anspruch 1, umfassend einen Schritt (252) zum Empfangen des mindestens einen Sensorsignals (135) von dem mindestens einen Sensor (130) über eine Eingabeschnittstelle (152).

3. Verfahren (200) nach einem der vorstehenden Ansprüche, umfassend einen Schritt (258) zum Ausgeben des Steuersignals (157) an die mindestens eine Betätigungsvorrichtung (142) über eine Ausgabeschnittstelle (158).

4. Steuereinheit (150), umfassend Mittel (154, 156) zum Ausführen der Schritte des Verfahrens (200) nach einem der vorstehenden Ansprüche.

5. Lenksystem (110) für ein Fahrzeug (100), wobei das Lenksystem (110) Folgendes umfasst:
eine Gestängeanordnung (120), die eine Welle (122), mindestens eine weitere Welle (124) und mindestens ein Kardangelenk (126), das die Wellen (122, 124) miteinander koppelt, aufweist;
mindestens einen Sensor (130) zum Erfassen einer Rotation der Welle (122);
eine Servolenkungsanordnung (140), die mindestens eine Betätigungsvorrichtung (142) aufweist; und
eine Steuereinheit (150) nach Anspruch 4, wobei die Steuereinheit (150) mit dem mindestens einen Sensor (130) und der mindestens einen Betätigungsvorrichtung (142) kommunikativ verbunden ist.

6. Computerprogramm, das Anweisungen umfasst, die, wenn das Programm von einem Computer ausgeführt wird, der ein Lenksystem (110) für ein Fahrzeug (100) nach Anspruch 5 steuert, den Computer veranlassen, die Schritte des Verfahrens (200) nach einem der Ansprüche 1 bis 3 auszuführen.

7. Computerlesbarer Datenträger, der das Computerprogramm nach Anspruch 6 darauf gespeichert aufweist.

## Revendications

1. Procédé (200) de commande d'un système de direction (110) pour un véhicule (100), dans lequel le procédé (200) comprend les étapes consistant à :
déterminer (254) une mesure d'uniformité (155) d'une position angulaire et d'une vitesse d'un arbre (122) d'un ensemble de tringlerie (120) du système de direction (110), dans lequel l'arbre (122) est couplé à au moins un autre arbre (124) de l'ensemble de tringlerie (120) au moyen d'au moins un joint universel (126), dans lequel la mesure d'uniformité (155) est déterminée à l'aide d'au moins un signal de capteur (135) provenant d'au moins un capteur (130) du système de direction (110) pour détecter une rotation de l'arbre (122) lorsqu'un couple de rotation est entré par un conducteur du véhicule (100), dans lequel la position angulaire et la vitesse de l'arbre (122) sont constatées à partir de l'au moins un signal de capteur (135), dans lequel l'étape (254) de détermination est exécutée de manière répétée pour déterminer une mesure d'uniformité dynamique (155), dans lequel lors de l'étape (254) de détermination, la mesure d'uniformité dynamique (155) est stockée et mise à jour à chaque exécution répétée de l'étape (254) de détermination ; et
générer (256) un signal de commande (157) pour commander au moins un actionneur (142) d'un ensemble de direction assistée (140) du système de direction (110), dans lequel le signal de commande (157) est généré en fonction de la mesure d'uniformité (155) pour comprendre un paramètre de commande définissant un couple de rotation correctif pour ajuster un couple de rotation fourni à l'ensemble de tringlerie (120) par l'au moins un actionneur (142), dans lequel l'étape (256) de génération est exécutée de manière répétée à l'aide de la mesure d'uniformité dynamique (155).

2. Procédé (200) selon la revendication 1, comprenant une étape (252) de réception de l'au moins un signal de capteur (135) provenant de l'au moins un capteur (130) via une interface d'entrée (152).

3. Procédé (200) selon l'une des revendications précédentes, comprenant une étape (258) de transmission du signal de commande (157) à l'au moins un actionneur (142) via une interface de transmission (158).

4. Dispositif de commande (150) comprenant des moyens (154, 156) pour réaliser les étapes du procédé (200) selon l'une des revendications précédentes.

5. Système de direction (110) pour un véhicule (100), dans lequel le système de direction (110) comprend :
un ensemble de tringlerie (120) présentant un arbre (122), au moins un autre arbre (124) et au moins un joint universel (126) couplant les arbres (122, 124) ;
au moins un capteur (130) pour détecter une rotation de l'arbre (122) ;
un ensemble de direction assistée (140) présentant au moins un actionneur (142) ;
et
un dispositif de commande (150) selon la revendication 4, dans lequel le dispositif de commande (150) est connecté sur le plan de la communication à l'au moins un capteur (130) et à l'au moins un actionneur (142).

6. Programme informatique comprenant des instructions qui, lorsque le programme est exécuté par un ordinateur commandant un système de direction (110) pour un véhicule (100) selon la revendication 5, amènent l'ordinateur à exécuter les étapes du procédé (200) selon l'une des revendications 1 à 3.

7. Support de données lisible par ordinateur présentant stocké sur celui-ci le programme informatique selon la revendication 6.
